# EUROPEAN PATENT APPLICATION

(11) **EP 4 636 347 A1**
(43) Date of publication of application: **22.10.2025**
(21) Application number: 24744261.9
(22) Date of filing: 16.01.2024
(51) Int. Cl.: F28F 1/02, F28F 1/14, F28F 9/02, F28F 9/26, F25B 39/00

(54) **HEAT EXCHANGER FLAT TUBE, HEAT EXCHANGER FLAT TUBE ASSEMBLY AND HEAT EXCHANGER**

(30) Priority: 17.01.2023 CN 202320169852 U
(71) Applicant: Zhejiang Dunan Artificial Environment Co., Ltd., Shaoxing Zhejiang 311835 (CN)
(72) Inventor: DING, Ergang, Shaoxing, Zhejiang 311835 (CN); CAO, Ronghui, Shaoxing, Zhejiang 311835 (CN); SUN, Yu, Shaoxing, Zhejiang 311835 (CN)
(74) Representative: Berggren Oy
(86) International application number: PCT/CN2024/072603
(87) International publication number: WO 2024/153086

(57) **Abstract**

Some embodiments of the present invention provide a heat exchanger flat tube, a heat exchanger flat tube assembly and a heat exchanger. The heat exchanger flat tube includes: a flat tube body having a fin mounting section and a finless section which are communicated with each other, the finless section comprising a straight tube section and a bent section, the fin mounting section being communicated with the straight tube section through the bent section, and the fin mounting section and the straight tube section being oppositely arranged, the end of the fin mounting section away from the bent section is configured to be connected to a header. The present invention effectively solves the problem in the art known to inventors that the welding joint between a heat exchanger flat tube and a header is susceptible to corrosion damage.

## Description

The present invention claims priority to patent invention No. 202320169852.8, entitled "HEAT EXCHANGER FLAT TUBE, HEAT EXCHANGER FLAT TUBE ASSEMBLY AND HEAT EXCHANGER" filed with the State Intellectual Property Office of P. R. China on January 17, 2023.

### Technical Field

The present invention relates to the technical field of air conditioners, and specifically to a heat exchanger flat tube, a heat exchanger flat tube assembly and a heat exchanger.

### Background

At present, a heat exchanger flat tube of a micro-channel evaporator is usually placed vertically, a header is placed horizontally, the heat exchanger and the header are welded and communicated, and the header is located below the heat exchanger flat tube, thereby ensuring that a refrigerating medium in the header can uniformly flow into each heat exchanger flat tube.

However, during the actual operation of the micro-channel evaporator, condensed water will flow through the welding joint between the heat exchanger flat tube and the header along the surface of the heat exchanger flat tube, causing corrosion cracking at the welding joint and leakage of the refrigerating medium, and affecting the refrigerating effect of the evaporator.

### Summary

Some embodiments of the present invention provide a heat exchanger flat tube, a heat exchanger flat tube assembly and a heat exchanger to solve the problem in the art known to inventors that the welding joint between a heat exchanger flat tube and a header is susceptible to corrosion damage.

In order to solve the above problem, according to one aspect of the present invention, a heat exchanger flat tube is provided. The heat exchanger flat tube includes: a flat tube body having a fin mounting section and a finless section which are communicated with each other, the finless section includes a straight tube section and a bent section, the fin mounting section is in communication with the straight tube section through the bent section, and the fin mounting section and the straight tube section are oppositely arranged, an end of the fin mounting section away from the bent section is configured to be connected with a header.

Applying the technical solution of this invention, the flat tube body of the heat exchanger flat tube has the fin mounting section and the finless section which are communicated with each other, the fin mounting section is configured to mount a heat exchange fin, and the finless section is not provided with a heat exchange fin and is bent. In this way, the condensed water condensed on an outer surface of the heat exchanger flat tube flows to the bottom of the bent section under the self-gravity and drips, and does not accumulate at the joint between the fin mounting section and the header, so as to prevent the condensed water from corroding the welding joint between the fin mounting section and the header, thereby solving the problem in the art known to inventors that the joint between a heat exchanger flat tube and a header is susceptible to corrosion damage, and prolonging the service life of the heat exchanger flat tube.

In some embodiments, a tangent surface of an outer vertex M of the bent section forms a reference surface N, there is a distance L5 between the reference surface N and a free end of the fin mounting section, there is a distance L6 between the reference surface N and a free end of the straight tube section, and L5>L6.

In some embodiments, the bent section includes: a first transition tube section, a first end of the first transition tube section being connected with the fin mounting section; a bent tube section; and a second transition tube section, a first end of the second transition tube section being connected with the straight tube section, and a second end of the second transition tube section is connected with a second end of the first transition tube section through the bent tube section, a length L3 of the first transition tube section and a length L1 of the second transition tube section satisfy: L3≤L1.

In some embodiments, a length L2 of the straight tube section, the length L3 of the first transition tube section, the length L1 of the second transition tube section, an arc length L of the bent tube section, a central angle α corresponding to the bent tube section, an outer arc radius R₀ of the bent tube section, a width T of the flat tube body and a total length L_{UB} of the finless section satisfy: L_{UB}=L1+L2+L3+L, L=πR₀/180, and 0.5T≤R₀≤3T.

In some embodiments, a length L4 of the fin mounting section, a width T of the flat tube body and a length L2 of the straight tube section satisfy: T≤L2<L4.

In some embodiments, a width T of the flat tube body and the length L3 of the first transition tube section satisfy: T≤L3.

In some embodiments, a width T of the flat tube body and the length L1 of the second transition tube section satisfy: T<L1≤4T.

In some embodiments, a distance L6 between the reference surface and a free end of the straight tube section, a length L2 of the straight tube section, the length L1 of the second transition tube section and an outer arc radius R₀ of the bent tube section satisfy: L6=L2+L1+A*R₀, and 0.75≤A≤1.00, the central angle α corresponding to the bent tube section satisfies: α≤90°.

In some embodiments, an outer surface of the first transition tube section is provided with an anti-corrosion coating; or, an outer surface of the second transition tube section is provided with an anti-corrosion coating; or, outer surfaces of the first transition tube section and the second transition tube section are both provided with anti-corrosion coatings.

In some embodiments, two flat tube bodies are provided, the two flat tube bodies are oppositely arranged and have a predetermined angle, and the straight tube sections of the two flat tube bodies are oppositely arranged or arranged facing away from each other.

According to another aspect of the present invention, a heat exchanger flat tube assembly is provided. The heat exchanger flat tube assembly includes two heat exchanger flat tubes, the two heat exchanger flat tubes are oppositely arranged and form a V shape or an A shape, the heat exchanger flat tube is the above heat exchanger flat tube.

According to still another aspect of the present invention, a heat exchanger is provided. The heat exchanger includes a heat exchanger flat tube, a header and a distribution tube, the distribution tube has a distribution hole which is communicated with the header, a medium entering the distribution tube enters the header through the distribution hole, and a liquid outlet direction of the distribution hole facing the side away from the heat exchanger flat tube, the heat exchanger flat tube is the above heat exchanger flat tube.

### Brief Description of the Drawings

The accompanying drawings of the specification, constituting a part of the present invention, are used for providing a further understanding of the present invention. The exemplary embodiments of the present invention and the descriptions thereof are intended to explain the present invention, but do not constitute an improper limitation on the present invention. In the accompanying drawings:
Fig.1 illustrates a front view of Embodiment 1 of a heat exchanger flat tube according to the present invention before bending;
Fig. 2 illustrates a size marking diagram of the heat exchanger flat tube in Fig. 1 after bending;
Fig. 3 illustrates a front view of the heat exchanger flat tube in Fig. 1 after bending;
Fig. 4 illustrates a front view of Embodiment 2 of a heat exchanger flat tube according to the present invention;
Fig. 5 illustrates a front view of Embodiment 3 of a heat exchanger flat tube assembly according to the present invention;
Fig. 6 illustrates a front view of Embodiment 4 of a heat exchanger flat tube assembly according to the present invention;
Fig. 7 illustrates a front view of Embodiment 5 of a heat exchanger flat tube assembly according to the present invention;
Fig. 8 illustrates a front view of Embodiment 6 of a heat exchanger flat tube assembly according to the present invention;
Fig. 9 illustrates a front view of Embodiment 7 of a heat exchanger flat tube assembly according to the present invention;
Fig. 10 illustrates a front view of Embodiment 8 of a heat exchanger flat tube assembly according to the present invention;
Fig. 11 illustrates a front view of Embodiment 9 of a heat exchanger flat tube assembly according to the present invention;
Fig. 12 illustrates a front view of Embodiment 10 of a heat exchanger flat tube according to the present invention;
Fig. 13 illustrates a front view of Embodiment 11 of a heat exchanger flat tube according to the present invention;
Fig. 14 illustrates a three-dimensional structural diagram of the heat exchanger in Fig. 1; and
Fig. 15 illustrates a partial enlarged view of a part A of the heat exchanger in Fig. 14.

The above accompanying drawings have the following reference numerals:
10. flat tube body; 11. straight tube section; 12. bent section; 121. first transition tube section; 122. bent tube section; 123. second transition tube section; 13. fin mounting section; 20. header; 30. fin; 40. distribution tube.

### Detailed Description of the Embodiments

It should be noted that in the case of no conflict, embodiments in the present invention and features in the embodiments can be combined with each other. The present invention will be described in detail below with reference to the accompanying drawings in conjunction with the embodiments.

It should be noted that unless otherwise specified, all technical and scientific terms used in the present invention have the same meanings as commonly understood by those skilled in the art of the present invention.

In the present invention, unless otherwise specified, the used directional words such as "upper and lower" are usually related to the directions shown in the accompanying drawings, or related to the upright, vertical or gravity directions. Similarly, for the convenience of understanding and description, "left and right" usually refer to the left and right shown in the accompanying drawings, and "inside and outside" refer to the inside and outside relative to the contour of each component, but the above directional words are not intended to limit the present invention.

In order to solve the problem in the art known to inventors that the welding joint between a heat exchanger flat tube and a header is susceptible to corrosion damage, the present invention provides a heat exchanger flat tube, a heat exchanger flat tube assembly and a heat exchanger.

### Embodiment 1

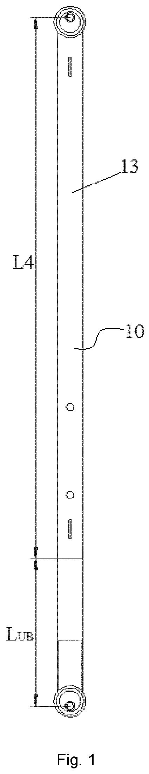

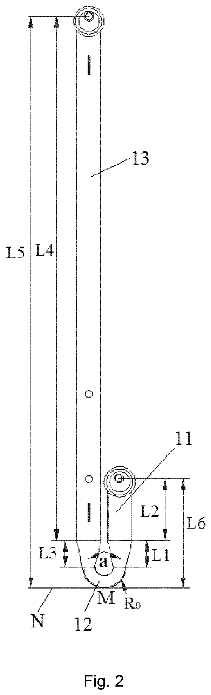

As shown in Fig. 1 to Fig. 3, a heat exchanger flat tube includes a flat tube body 10, the flat tube body 10 has a fin mounting section 13 and a finless section which are communicated with each other, the finless section includes a straight tube section 11 and a bent section 12, the fin mounting section 13 is communicated with the straight tube section 11 through the bent section 12, and the fin mounting section 13 and the straight tube section 11 are oppositely arranged. The end of the fin mounting section 13 away from the bent section 12 is configured to be connected with a header 20.

Applying the technical solution of this embodiment, the flat tube body 10 of the heat exchanger flat tube has the fin mounting section 13 and the finless section which are communicated with each other, the fin mounting section 13 is configured to mount a heat exchange fin, and the finless section is not provided with a heat exchange fin and is bent, so that the bent section 12 is located at the bottommost position. In this way, the condensed water condensed on an outer surface of the heat exchanger flat tube flows to the bottom of the bent section 12 under the self-gravity and drips, and does not accumulate at the joint between the fin mounting section 13 and the header 20, so as to prevent the condensed water from corroding the welding joint between the fin mounting section 13 and the header 20, thereby solving the problem in the prior art that the joint between a heat exchanger flat tube and a header is susceptible to corrosion damage, and prolonging the service life of the heat exchanger flat tube.

In some embodiments, a tangent surface of an outer vertex M of the bent section 12 forms a reference surface N, there is a distance L5 between the reference surface N and the free end of the fin mounting section 13, there is a distance L6 between the reference surface N and the free end of the straight tube section 11, and L5>L6. In this way, because the straight tube section 11 is not provided with a heat exchange fin, on the premise of preventing the welding seam between the fin mounting section 13 and the header 20 from being soaked and corroded by condensed water, the above setting between the distance L5 and the distance L6 can effectively avoid the waste of materials to reduce the processing cost of the heat exchanger flat tube.

In some embodiments, the distance L5 and the distance L6 satisfy: L6≤1/2L5, so that a worker can conveniently process and manufacture the fin mounting section 13 and the straight tube section 11 to reduce the processing difficulty for the worker. Furthermore, the above setting relatively reduces the length of the straight tube section 11 and increases the length of the fin mounting section 13, thereby greatly improving the heat exchange efficiency of the heat exchanger flat tube.

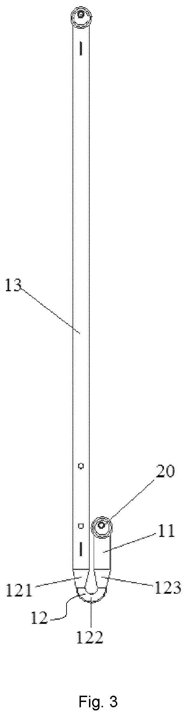

As shown in Fig. 3, the bent section 12 includes a first transition tube section 121, a bent tube section 122 and a second transition tube section 123. The first end of the first transition tube section 121 is connected with the fin mounting section 13. The first end of the second transition tube section 123 is connected with the straight tube section 11, and the second end of the second transition tube section 123 is connected with the second end of the first transition tube section 121 through the bent tube section 122. The length L3 of the first transition tube section 121 and the length L1 of the second transition tube section 123 satisfy: L3≤L1. In this way, because the first transition tube section 121 is located on the side where the condensed water is discharged, in order to ensure that the condensed water contacts the heat exchanger flat tube as little as possible, the shorter the length L3, the better. Furthermore, increasing the length of the second transition tube section 123 can also reduce the difficulty in process bending and reduce the difficulty in coating anti-corrosion coatings, thereby further reducing the processing cost and processing difficulty of the heat exchanger flat tube.

In some embodiments, reducing the twisting degree of the second transition tube section 123 can reduce the probability of damage to the heat exchanger flat tube, thereby improving the corrosion resistance and structural strength, and prolonging the service life of the heat exchanger flat tube.

In some embodiments, the length L2 of the straight tube section 11, the length L3 of the first transition tube section 121, the length L1 of the second transition tube section 123, the arc length L of the bent tube section 122, the central angle α corresponding to the bent tube section 122, the outer arc radius R₀ of the bent tube section 122, the width T of the flat tube body 10 and the total length L_{UB} of the finless section satisfy: L_{UB}=L1+L2+L3+L, L=π180°-αR₀/180, and 0.5T≤R₀≤3T. In this way, the above settings between the outer arc radius R₀ of the bent tube section 122 and the width T of the flat tube body 10 not only improve the heat exchange efficiency of the heat exchanger flat tube, but also improve the structural strength of the heat exchanger flat tube, thereby prolonging the service life of the heat exchanger, and also improving the performance of the heat exchanger flat tube passing through a medium.

In some embodiments, the outer arc radius R₀ of the bent tube section 122 and the thickness T of the flat tube body 10 satisfy: R₀=2T.

In some embodiments, the length L4 of the fin mounting section 13, the width T of the flat tube body 10, and the length L2 of the straight tube section 11 satisfy: T≤L2<L4. In this way, because the length L3 of the first transition tube section 121 and the length L1 of the second transition tube section 123 satisfy: L3<L1, the length L2 of the straight tube section 11 is less than the length L4 of the fin mounting section 13. Considering the welding process requirements for the straight tube section 11 and the header 20, if they are too close, it can cause welding defects in the heat exchanger flat tube. Therefore, the length L2 of the straight tube section 11 should be at least greater than the width T of the flat tube body 10.

In some embodiments, the width T of the flat tube body 10 and the length L3 of the first transition tube section 121 satisfy: T≤L3. In this way, considering that the bent section 12 needs to satisfy the bending process requirements, the length L3 of the first transition tube section 121 should be at least greater than or equal to the width T of the flat tube body 10; and considering that there is no heat exchange in the bent section 12, if the bent section 12 is too long, it will weaken the heat exchange performance of a micro-channel heat exchanger in a limited space. Therefore, it is better to shorten the bent section 12 as much as possible.

In some embodiments, the width T of the flat tube body 10 and the length L1 of the second transition tube section 123 satisfy: T<L1≤4T. In this way, considering the process requirements for the bent section 12, the length L1 of the second transition tube section 123 should be at least greater than the width T of the flat tube body 10; and considering that the length L1 of the second transition tube section 123 is greater than the length L3 of the first transition tube section 121 to facilitate the discharge of the condensed water and the control of the length of a non-heat exchange section, the length L1 of the second transition tube section 123 is controlled within 4T.

In this embodiment, the first transition tube section 121 is located on an outer side, and the second transition tube section 123 is located on an inner side. The above settings ensure that the condensed water accumulated during the heat exchange process of the heat exchanger can be discharged from the surface of the heat exchanger due to gravity through the radian generated by twisting the first transition tube section 121, the second transition tube section 123, and the bent tube section 122, thereby preventing the condensed water from accumulating at the welding seam between the heat exchanger flat tube and the header 20.

In some embodiments, the distance L6 between the reference surface and the free end of the straight tube section 11, the length L2 of the straight tube section 11, the length L1 of the second transition tube section 123, and the outer arc radius R₀ of the bent tube section 122 satisfy: L6=L2+L1+A*R₀, and 0.75≤A≤1.00, the central angle α corresponding to the bent tube section 122 satisfies: α≤90°. In this way, the above settings further improve the drainage performance of the heat exchanger flat tube, thereby preventing the condensed water from accumulating on the heat exchanger flat tube and affecting the operation performance of the heat exchanger, and improving the heat exchange efficiency of the heat exchanger.

In this embodiment, the central angle α corresponding to the bent tube section 122 is 60°, which facilitates the mounting thereof and also improves the drainage capacity of the bent tube section 122.

In some embodiments, an outer surface of the first transition tube section 121 is provided with an anti-corrosion coating; or, an outer surface of the second transition tube section 123 is provided with an anti-corrosion coating; or, outer surfaces of the first transition tube section 121 and the second transition tube section 123 are both provided with anti-corrosion coatings. In this way, the above settings improve the corrosion resistance of the first transition tube section 121 and the second transition tube section 123 to prevent corrosion damage inside the bent section 12, thereby prolonging the service life of the heat exchanger.

In some embodiments, the extension direction of the straight tube section 11 is parallel to the extension direction of the fin mounting section 13; or, an included angle a1 is formed between the extension direction of the straight tube section 11 and the extension direction of the fin mounting section 13. In this way, the condensed water condensed on the fin mounting section 13 can flow along the surface of the fin mounting section 13 to the bent section 12 under the self-gravity to prevent the condensed water from accumulating at the welding joint between the fin mounting section 13 and the header 20 and corroding or damaging the welding joint between the fin mounting section 13 and the header 20, thereby prolonging the service life of the heat exchanger. Furthermore, on the one hand, the above settings make the position relationship between the straight tube section 11 and the fin mounting section 13 more flexible to meet different usage requirements and working conditions, and also improve the processing flexibility of the worker; and on the other hand, the position of the straight tube section 11 away from the end of the bent section 12 can be adjusted by changing the size of the included angle a1, so that the straight tube section 11 can be welded on the header 20 at different positions, thereby improving the assembly flexibility of the heat exchanger flat tube and the header 20.

In this embodiment, the extension direction of the straight tube section 11 is parallel to the extension direction of the fin mounting section 13. In this way, when the heat exchanger flat tube is placed vertically, the flow direction of the condensed water on the fin mounting section 13 is the same as the direction of gravity, so that the condensed water attached to the welding joint between the fin mounting section 13 and the header 20 can quickly flow towards the bent section 12 and accumulate at the bent section 12, rather than accumulate at the welding joint between the fin mounting section 13 and the header 20, thereby further reducing the corrosion impact of the condensed water on the welding joint between the fin mounting section 13 and the header 20, and prolonging the service life of the heat exchanger flat tube.

In some embodiments, a part of the flat tube body 10 is bent along the width direction of the flat tube body 10 to form a bent section 12, one bent section 12 is formed; or a plurality of bent sections 12 are formed, and the plurality of bent sections 12 are arranged at intervals along the length direction of the flat tube body 10. In this way, by the above settings, on the one hand, the worker can change the shape of the flat tube body 10 by changing the number and position of the bent section 12, so that the flat tube body 10 can adapt to heat exchangers of different sizes and specifications, thereby improving the use universality of the heat exchanger flat tube; and on the other hand, the flat tube body 10 is of an integrally formed structure, thereby improving the structural strength of the heat exchanger flat tube, and prolonging the service life of the heat exchanger. Furthermore, the above settings make the processing of the bent section 12 easier and more convenient, thereby reducing the processing cost and processing difficulty of the heat exchanger flat tube.

In this embodiment, one bent section 12 is formed, so that the structure of the flat tube body 10 is simpler and is easier to process and implement, thereby reducing the processing difficulty of the worker and the processing cost of the flat tube body 10.

As shown in Fig. 1 to Fig. 3, the straight tube section 11 and the fin mounting section 13 are respectively located on two sides of the bent section 12.

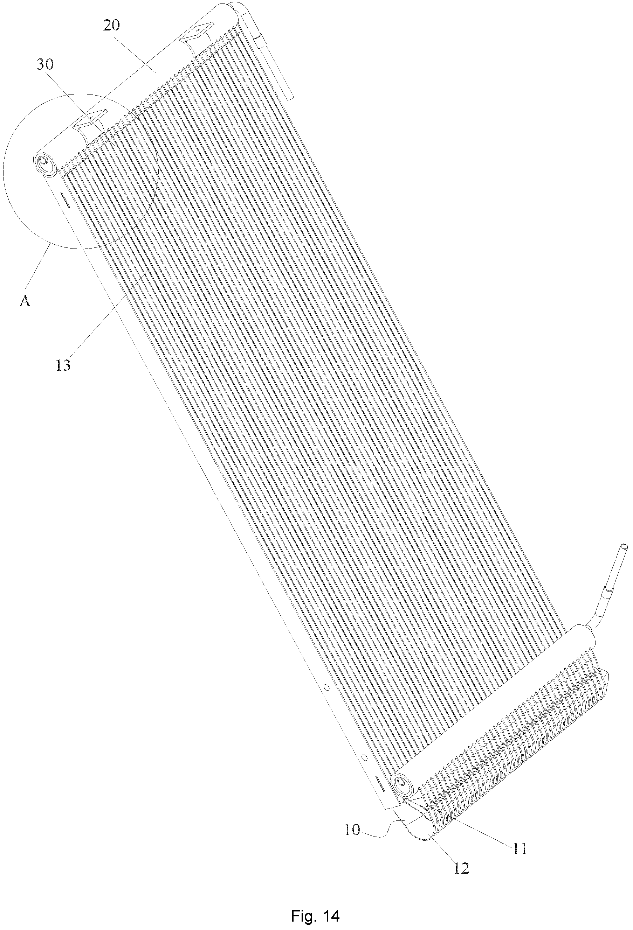

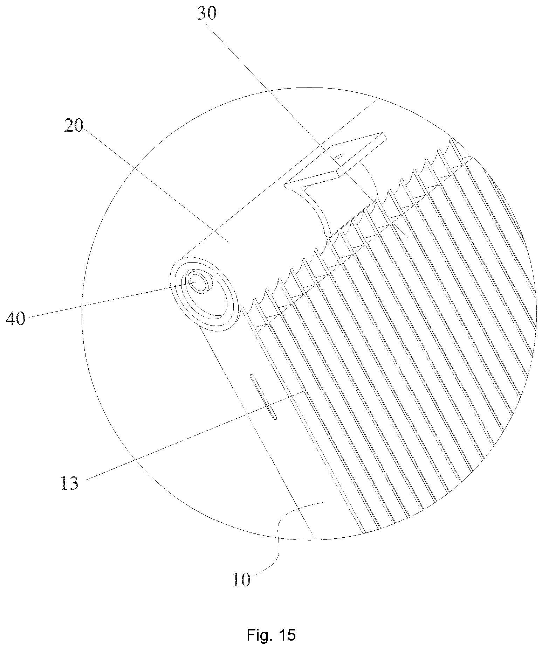

As shown in Fig. 14 and Fig. 15, the present invention further provides a heat exchanger, including a heat exchanger flat tube, a header 20 and a distribution tube 40. The distribution tube 40 has a distribution hole communicated with the header 20, a medium entering the distribution tube 40 enters the header 20 through the distribution hole, and a liquid outlet direction of the distribution hole faces the side away from the heat exchanger flat tube. The heat exchanger flat tube is the above heat exchanger flat tube.

In some embodiments, after a refrigerant is sprayed upwards from the distribution hole of the distribution tube 40, the refrigerant is sprayed towards an inner side wall away from the header of the heat exchanger flat tube, and the refrigerant forms a disturbance inside the header, which is favorable for enabling the gas-liquid two-phase refrigerant at an inlet to be uniformly distributed into each heat exchanger flat tube, so as to improve the liquid distribution performance, thereby improving the heat exchange efficiency.

In some embodiments, the heat exchanger is a micro-channel heat exchanger.

In this embodiment, the heat exchanger further comprises a plurality of fins 30, the plurality of fins 30 are arranged in parallel to form a plurality of rows, the fins 30 are provided with inserting slots, a plurality of heat exchanger flat tubes are arranged in parallel to form a plurality of layers, and the fin mounting sections 13 are penetrated in the inserting slots. The setting way of penetrating the fin mounting sections 13 in the inserting slots is favorable for drainage of the heat exchanger.

### Embodiment 2

The difference between a heat exchanger flat tube in Embodiment 2 and the heat exchanger flat tube in Embodiment 1 is: the width of the first transition tube section 121 is different from the width of the second transition tube section 123.

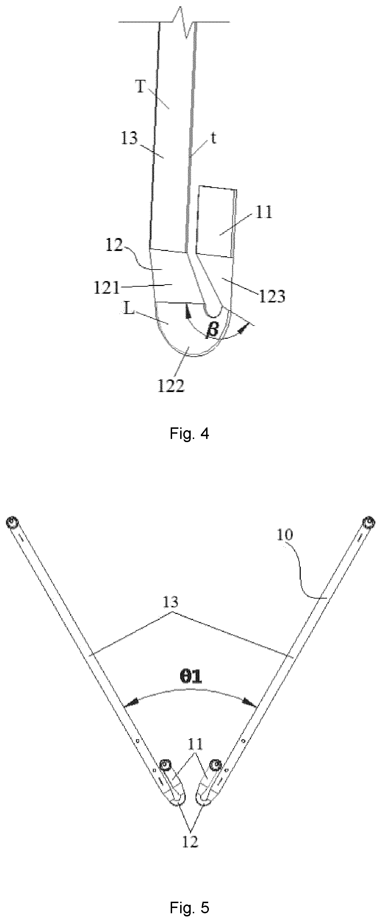

As shown in Fig. 4, along the direction from the fin mounting section 13 to the finless section, the width of the first transition tube section 121 gradually increases. The structure of the heat exchanger flat tube has a certain ductility, which is favorable for the bending of the flat tube. The part of the second transition tube section 123, opposite to the first transition tube section 121, is adapted to the first transition tube section 121.

### Embodiment 3

Optionally, the present invention further provides a heat exchanger flat tube assembly, including two heat exchanger flat tubes, and the two heat exchanger flat tubes are oppositely arranged and form a V shape or an A shape, the heat exchanger flat tube is the above heat exchanger flat tube. In this way, the above settings not only increase the circulation of a refrigerating medium in the heat exchanger to improve the refrigerating efficiency of the heat exchanger, but also increase the heat exchange area of the heat exchanger, thereby improving the refrigerating effect of the heat exchanger. Furthermore, the above settings make the setting way of the two heat exchanger flat tubes more flexible and diverse to meet different working conditions and usage requirements, and also improve the processing flexibility of the worker.

As shown in Fig. 5, two heat exchanger flat tubes are oppositely arranged and form a V shape, and the straight tube sections 11 of two flat tube bodies 10 are oppositely arranged, that is, the two straight tube sections 11 are located on the inner sides of two fin mounting sections 13, so that headers 20 connected to each flat tube body 10 are arranged adjacent to each other, the straight tube section 11 of each flat tube body 10 is parallel to the fin mounting section 13.

### Embodiment 4

The difference between a heat exchanger flat tube assembly in Embodiment 4 and the heat exchanger flat tube assembly in Embodiment 3 is: the setting positions of straight tube sections 11 are different.

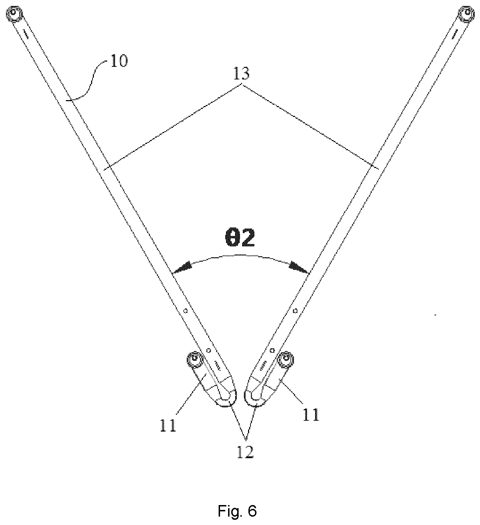

As shown in Fig. 6, the straight tube sections 11 of two flat tube bodies 10 are arranged facing away from each other, that is, the two straight tube sections 11 are located on the outer sides of two fin mounting sections 13.

### Embodiment 5

The difference between a heat exchanger flat tube assembly in Embodiment 5 and the heat exchanger flat tube assembly in Embodiment 3 is: the relative positions of straight tube sections 11 and fin mounting sections 13 are different.

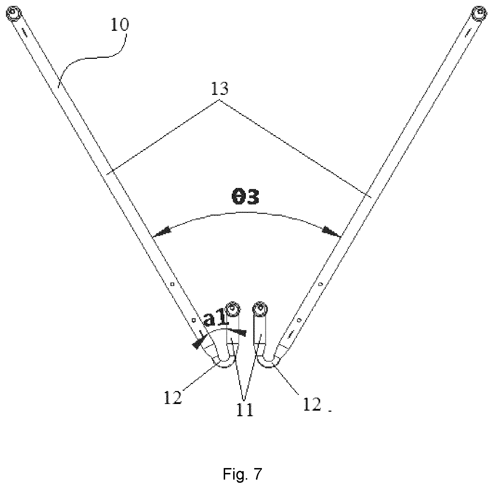

As shown in Fig. 7, an included angle a1 is formed between a straight tube section 11 and a fin mounting section 13. In this way, the relative position relationship between a liquid inlet and a liquid outlet can be changed by changing the value of the included angle a1, the liquid inlet is the end of the straight tube section 11 away from the bent section 12, and the liquid outlet is the end of the fin mounting section 13 away from the bent section 12, so that the heat exchanger flat tube can adapt to heat exchangers of different specifications and sizes. Furthermore, the above settings make the structure of the heat exchanger flat tube more flexible and diverse to meet different working conditions and usage requirements, and also improve the processing flexibility of the worker.

### Embodiment 6

The difference between a heat exchanger flat tube assembly in Embodiment 6 and the heat exchanger flat tube assembly in Embodiment 3 is: the relative settings of two heat exchanger flat tubes are different.

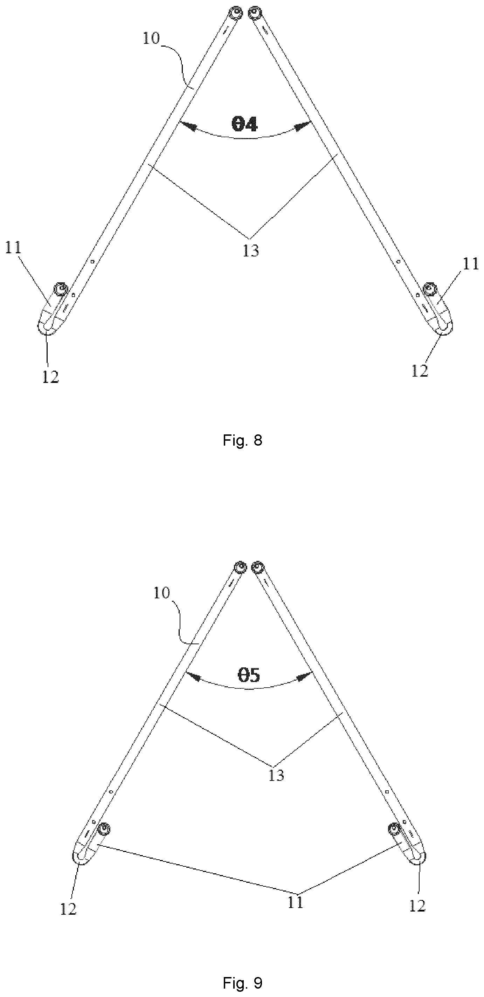

As shown in Fig. 8, two heat exchanger flat tubes are oppositely arranged and form an A shape, and the straight tube sections 11 of two flat tube bodies 10 are arranged facing away from each other, that is, the two straight tube sections 11 are located on the outer sides of two fin mounting sections 13. In this way, the above settings not only increase the circulation of a refrigerating medium in the heat exchanger to improve the refrigerating efficiency of the heat exchanger, but also increase the heat exchange area of the heat exchanger, thereby improving the refrigerating effect of the heat exchanger. Furthermore, the above settings make the setting way of the two heat exchanger flat tubes more flexible and diverse to meet different working conditions and usage requirements, and also improve the processing flexibility of the worker.

### Embodiment 7

The difference between a heat exchanger flat tube assembly in Embodiment 7 and the heat exchanger flat tube assembly in Embodiment 6 is: the setting positions of straight tube sections 11 are different.

As shown in Fig. 9, the straight tube sections 11 of two flat tube bodies 10 are oppositely arranged, that is, the two straight tube sections 11 are located on the inner sides of two fin mounting sections 13.

### Embodiment 8

The difference between a heat exchanger flat tube assembly in Embodiment 8 and the heat exchanger flat tube assembly in Embodiment 6 is: the setting positions of straight tube sections 11 are different.

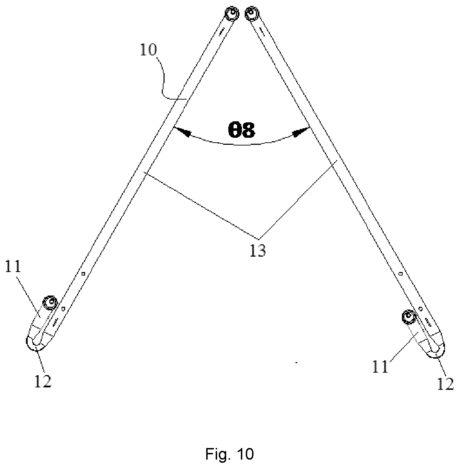

As shown in Fig. 10, the straight tube section 11 of the heat exchanger flat tube located on the left side is located on the outer side, and the straight tube section 11 of the heat exchanger flat tube located on the right side is located on the inner side.

### Embodiment 9

The difference between a heat exchanger flat tube assembly in Embodiment 9 and the heat exchanger flat tube assembly in Embodiment 6 is: the setting positions of straight tube sections 11 are different.

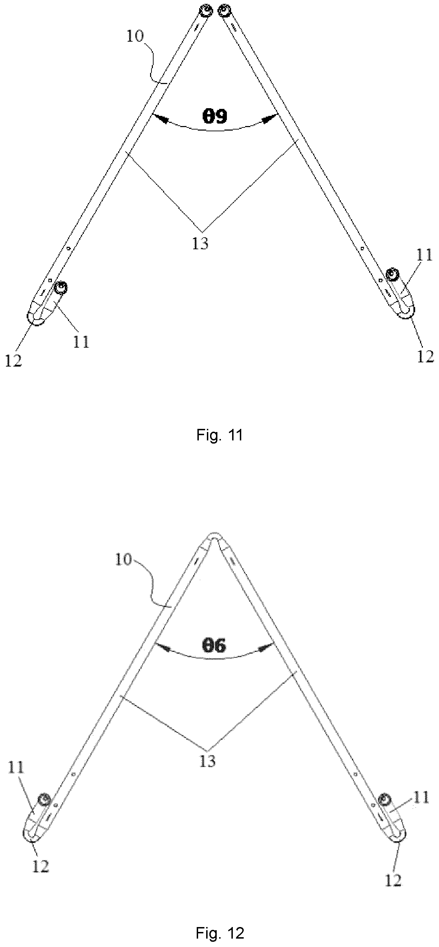

As shown in Fig. 11, the straight tube section 11 of the heat exchanger flat tube located on the left side is located on the inner side, and the straight tube section 11 of the heat exchanger flat tube located on the right side is located on the outer side.

### Embodiment 10

The difference between a heat exchanger flat tube in Embodiment 10 and the heat exchanger flat tube in Embodiment 1 is: the number of flat tube bodies 10 is different.

Optionally, two flat tube bodies 10 are provided, the two flat tube bodies 10 are oppositely arranged and have an predetermined angle, and the straight tube sections 11 of the two flat tube bodies 10 are oppositely arranged or arranged facing away from each other. In this way, the above settings not only increase the circulation of a refrigerating medium in the heat exchanger to improve the refrigerating efficiency of the heat exchanger, but also increase the heat exchange area of the heat exchanger, thereby improving the refrigerating effect of the heat exchanger. Furthermore, the above settings make the setting position of the finless section more flexible and diverse to meet different working conditions and usage requirements, and also improve the processing flexibility of the worker.

As shown in Fig. 12, the straight tube sections 11 of two flat tube bodies 10 are arranged facing away from each other, that is, the two straight tube sections 11 are located on the outer sides of two fin mounting sections 13.

In this embodiment, the two flat tube bodies 10 are connected through a bent tube section, and the bent tube section is the same as the bent section 12, thereby reducing the processing cost of the heat exchanger flat tube.

### Embodiment 11

The difference between a heat exchanger flat tube in Embodiment 11 and the heat exchanger flat tube in Embodiment 10 is: the setting positions of straight tube sections 11 are different.

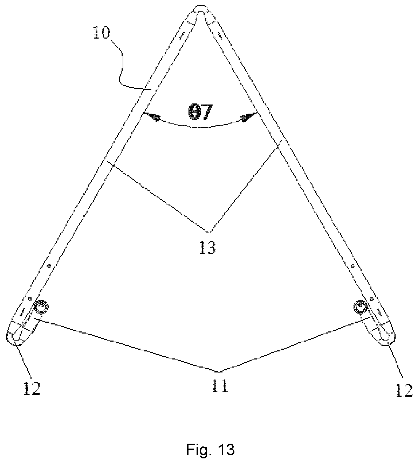

As shown in Fig. 13, the straight tube sections 11 of two flat tube bodies 10 are oppositely arranged, that is, the two straight tube sections 11 are located on the inner sides of two fin mounting sections 13.

From the above description, it can be seen that the above embodiments of the present invention achieve the following technical effects:
The flat tube body of the heat exchanger flat tube has the fin mounting section and the finless section which are communicated with each other, the fin mounting section is configured to mount a heat exchange fin, and the finless section is not provided with a heat exchange fin and is bent. In this way, the condensed water condensed on an outer surface of the heat exchanger flat tube flows to the bottom of the bent section under the self-gravity and drips, and does not accumulate at the joint between the fin mounting section and the header, so as to prevent the condensed water from corroding the welding joint between the fin mounting section and the header, thereby solving the problem in the prior art that the joint between a heat exchanger flat tube and a header is susceptible to corrosion damage, and prolonging the service life of the heat exchanger flat tube.

It is apparent that the embodiments described above are only a part of the embodiments of the present invention, but are not all of the embodiments. All other embodiments obtained by those of ordinary skill in the art based on the embodiments in the present invention without creative efforts shall fall within the scope of protection of the present invention.

It should be noted that the terms used here are only used for describing specific implementations, but are not intended to limit exemplary implementations according to the present invention. As used here, unless explicitly stated in the context, the singular form is also intended to include the plural form. In addition, it should also be understood that when the terms "include" and/or "comprise" are used in the specification, they indicate the presence of features, steps, operations, devices, assemblies, and/or combinations thereof.

It should be noted that the terms "first", "second", etc. in the specification and claims of the present invention and the above accompanying drawings are used to distinguish similar objects, but are not intended to describe a particular sequence or a precedence order. It should be understood that the data used in this way can be interchanged in appropriate circumstances, so that the implementations of the present invention described here can be implemented in a sequence other than those illustrated or described here.

## Claims

1. A heat exchanger flat tube, wherein the heat exchanger flat tube comprises:
a flat tube body (10), having a fin mounting section (13) and a finless section which are communicated with each other, the finless section comprises a straight tube section (11) and a bent section (12), the fin mounting section (13) is in communication with the straight tube section (11) through the bent section (12), and the fin mounting section (13) and the straight tube section (11) are oppositely arranged;
wherein an end of the fin mounting section (13) away from the bent section (12) is configured to be connected with a header (20).

2. The heat exchanger flat tube as claimed in claim 1, wherein a tangent surface of an outer vertex M of the bent section (12) forms a reference surface N, there is a distance L5 between the reference surface N and a free end of the fin mounting section (13), there is a distance L6 between the reference surface N and a free end of the straight tube section (11), and L5>L6.

3. The heat exchanger flat tube as claimed in claim 2, wherein the bent section (12) comprises:
a first transition tube section (121), a first end of the first transition tube section (121) being connected with the fin mounting section (13);
a bent tube section (122); and
a second transition tube section (123), a first end of the second transition tube section (123) being connected with the straight tube section (11), and a second end of the second transition tube section (123) is connected with a second end of the first transition tube section (121) through the bent tube section (122),
wherein a length L3 of the first transition tube section (121) and a length L1 of the second transition tube section (123) satisfy: L3≤L1.

4. The heat exchanger flat tube as claimed in claim 3, wherein a length L2 of the straight tube section (11), the length L3 of the first transition tube section (121), the length L1 of the second transition tube section (123), an arc length L of the bent tube section (122), a central angle α corresponding to the bent tube section (122), an outer arc radius R₀ of the bent tube section (122), a width T of the flat tube body (10) and a total length L_{UB} of the finless section satisfy: L_{UB}=L1+L2+L3+L, L=π(180°-α)R₀/180, and 0.5T≤R₀≤3T.

5. The heat exchanger flat tube as claimed in claim 1, wherein a length L4 of the fin mounting section (13), a width T of the flat tube body (10) and a length L2 of the straight tube section (11) satisfy: T≤L2<L4.

6. The heat exchanger flat tube as claimed in claim 3, wherein a width T of the flat tube body (10) and the length L3 of the first transition tube section (121) satisfy: T≤L3.

7. The heat exchanger flat tube as claimed in claim 3, wherein a width T of the flat tube body (10) and the length L1 of the second transition tube section (123) satisfy: T<L1≤4T.

8. The heat exchanger flat tube as claimed in claim 3, wherein a distance L6 between the reference surface and a free end of the straight tube section (11), a length L2 of the straight tube section (11), the length L1 of the second transition tube section (123) and a outer arc radius R₀ of the bent tube section (122) satisfy: L6=L2+L1+A*R₀, and 0.75≤A≤1.00, wherein a central angle α corresponding to the bent tube section (122) satisfies: α≤90°.

9. The heat exchanger flat tube as claimed in claim 3, wherein an anti-corrosion coating is disposed on an outer surface of the first transition tube section (121); or, an anti-corrosion coating is disposed on an outer surface of the second transition tube section (123); or, anti-corrosion coatings are disposed on outer surfaces of the first transition tube section (121) and the second transition tube section (123).

10. The heat exchanger flat tube as claimed in claim 1, wherein two flat tube bodies (10) are provided, the two flat tube bodies (10) are oppositely arranged and have a predetermined angle, and the straight tube sections (11) of the two flat tube bodies (10) are oppositely arranged or arranged facing away from each other.

11. A heat exchanger flat tube assembly, wherein comprising two heat exchanger flat tubes, the two heat exchanger flat tubes are oppositely arranged and form a V shape or an A shape, wherein the heat exchanger flat tube is the heat exchanger flat tube as claimed in any one of claims 1 to 10.

12. A heat exchanger, wherein comprising a heat exchanger flat tube, a header (20) and a distribution tube (40), the distribution tube (40) has a distribution hole which is communicated with the header (20), a medium entering the distribution tube (40) enters the header (20) through the distribution hole, and a liquid outlet direction of the distribution hole facing the side away from the heat exchanger flat tube, the heat exchanger flat tube is the heat exchanger flat tube as claimed in any one of claims 1 to 10.
